# EUROPÄISCHE PATENTSCHRIFT

(11) **EP 3 639 640 B1**
(45) Veröffentlichungstag und Bekanntmachung des Hinweises auf die Patenterteilung: **01.03.2023**
(21) Anmeldenummer: 19184902.5
(22) Anmeldetag: 08.07.2019
(51) Int. Cl.: A01B 59/06, A01B 71/02

(54) **LANDWIRTSCHAFTLICHES ARBEITSSYSTEM**
AGRICULTURAL SYSTEM
SYSTÈME DE TRAVAIL AGRICOLE

(30) Priorität: 10.09.2018 DE 102018122018
(43) Veröffentlichungstag der Anmeldung: 22.04.2020
(73) Patentinhaber: CLAAS Tractor SAS, 78141 Vélizy-Villacoublay Cedex (FR)
(72) Erfinder: Wieckhorst, Jan Carsten, 33104 Paderborn (DE); Ehlert, Christian, 33719 Bielefeld (DE); Meyer, Lennart, 52062 Aachen (DE)
(74) Vertreter: CLAAS Gruppe

(56) Entgegenhaltungen:
- EP-A2- 2 708 103
- WO-A1-2017/214440
- DE-A1-102012 100 180
- DE-A1-102016 118 203
- US-B2- 9 078 391

## Beschreibung

Die Erfindung betrifft ein landwirtschaftliches Arbeitssystem mit einer landwirtschaftlichen Arbeitsmaschine gemäß dem Oberbegriff von Anspruch 1, die über mindestens eine Geräteschnittstelle mit mindestens einem Anbaugerät bestückbar ist, sowie ein Verfahren für den Betrieb eines solchen Arbeitssystems gemäß dem Oberbegriff von Anspruch 13.

Das bekannte Arbeitssystem (EP 2 708 103 B1), von dem die Erfindung ausgeht, weist eine Steuerungsanordnung auf, die auf die Bewertung und/oder Optimierung der Arbeitsmaschinenkonfiguration der Arbeitsmaschine in Abhängigkeit von der Art des jeweils genutzten Anbaugeräts gerichtet ist. Hierfür sind die jeweils relevanten Parameter bekannter Anbaugeräte in einem Datenspeicher der Steuerungsanordnung abgelegt. Die Arbeitsmaschinenkonfiguration umfasst beispielsweise die Ballastierung der Arbeitsmaschine oder die Reifendrücke der Laufreifen der Arbeitsmaschine. Die Bewertung bzw. Optimierung der Arbeitsmaschinenkonfigurationen ist dort auf die Zielvorgabe einer nominellen Lebensdauer der Arbeitsmaschine gerichtet.

Ein weiteres ähnliches Arbeitssystem ist aus der DE 10 2016 118 203 A1 bekannt.

Während das bekannte Arbeitssystem einen ersten grundsätzlichen Ansatz für die Bewertung bzw. Optimierung der Arbeitsmaschinenkonfigurationen in Abhängigkeit von dem jeweils vorhanden Anbaugerät erlaubt, stellt die Genauigkeit bei der Bewertung bzw. Optimierung eine Herausforderung dar. Die vorhandenen Optimierungspotentiale lassen sich damit noch nicht voll ausschöpfen.

Der Erfindung liegt das Problem zugrunde, dass bekannte Antriebssystem derart auszugestalten und weiterzubilden, dass die Effizienz bei der Bewertung bzw. Optimierung der Arbeitsmaschinenkonfiguration gesteigert wird. Das obige Problem wird bei einem Arbeitssystem gemäß dem Oberbegriff von Anspruch 1 durch die Merkmale des kennzeichnenden Teils von Anspruch 1 gelöst.

Zunächst einmal wird davon ausgegangen, dass der Arbeitsmaschine eine oben angesprochene Arbeitsmaschinenkonfiguration zugeordnet ist, die vorzugsweise den Typ der Arbeitsmaschine und ggf. die wesentlichen Einstellparameter der Arbeitsmaschine umfasst. Ferner wird davon ausgegangen, dass dem Anbaugerät eine Anbaugerätekonfiguration zugeordnet ist, die entsprechend vorzugsweise den Typ des Anbaugeräts und ggf. die wesentlichen Einstellparameter des Anbaugeräts umfasst.

Weiter wird davon ausgegangen, dass es sich bei der landwirtschaftlichen Arbeitsmaschine um eine selbstfahrende Arbeitsmaschine handelt, die mit einer Antriebseinheit ausgestattet ist. Die Antriebseinheit wirkt über einen Antriebsstrang auf Bodeneingriffselemente, insbesondere auf Laufräder. Der Begriff "Bodeneingriffselement" umfasst all solche Komponenten, über die eine Fortbewegung der Arbeitsmaschine auf dem Boden möglich ist. Hierunter fallen beispielsweise alle Anordnungen von Raupen, Laufrädern oder dergleichen. Bei den Laufrädern kann es sich beispielsweise um Luftreifen oder dergleichen handeln.

Schließlich wird davon ausgegangen, dass eine der Arbeitsmaschine zugeordnete Bedien- und Anzeigeeinheit vorgesehen ist, über die Informationen an den Bediener ausgebbar und über den Bediener eingebbar sind.

Wesentlich ist nun die grundsätzliche Überlegung, dass die Arbeitsmaschine von dem Anbaugerät in erster Linie über die jeweilige Geräteschnittstelle mechanisch beeinflusst wird. Für den hier vorgesehenen Fall, dass bei der Bewertung bzw. Optimierung das jeweilige Anbaugerät berücksichtigt werden soll, lassen sich mit einer genauen Kenntnis der über die Geräteschnittstelle übertragenen Geräteschnittstellenlast die besten Wertungs- bzw. Optimierungsergebnisse erreichen.

Im Einzelnen wird vorgeschlagen, dass die Systemsteuerung eingerichtet ist, die Anbaugerätekonfiguration zu ermitteln, basierend auf der ermittelten Anbaugerätekonfiguration die über die Geräteschnittstelle übertragene Geräteschnittstellenlast zu berechnen und basierend auf der berechneten Geräteschnittstellenlast die Arbeitsmaschinenkonfiguration zu bewerten und/oder zu optimieren.

Vorschlagsgemäß wird aus der Kenntnis der Anbaugerätekonfiguration also die Geräteschnittstellenlast berechnet, sodass für die vorschlagsgemäße Bewertung bzw. Optimierung optimale Basisdaten vorliegen. Die Bewertung bzw. Optimierung kann unter den verschiedensten Zielvorgaben, insbesondere im Hinblick auf die Zielvorgaben der Reduzierung mechanischer Verlustleistung, der Steigerung der Kraftstoffeffizienz, der Steigerung der Lebensdauer bzw. der Einhaltung der nominellen Lebensdauer, dem Grad der Bodenschonung, dem Traktionswirkungsgrad, der resultierenden Arbeitsleistung oder dergleichen erfolgen.

Grundsätzlich kann zumindest ein Teil der Systemsteuerung, vorzugsweise die gesamte Systemsteuerung, als Maschinensteuerung ausgestaltet und in der Arbeitsmaschine angeordnet sein, wie in der ersten Alternative von Anspruch 2 vorgeschlagen. Es kann aber auch vorteilhaft sein, dass zumindest ein Teil der Systemsteuerung als Telemetriesteuerung ausgestaltet ist, die mit einem maschinenseitigen Steuerungsteil über eine Funkverbindung oder dergleichen kommuniziert, was Gegenstand der zweiten Alternative von Anspruch 2 ist.

Eine hohe Flexibilität bei der Berechnung der Geräteschnittstellenlast ergibt sich gemäß Anspruch 3 dadurch, dass die Systemsteuerung basierend auf der ermittelten Anbaugerätekonfiguration ein Anbaugerätemodell ermittelt, das den Zusammenhang zwischen einem Eingangsvariablensatz und der resultierenden Geräteschnittstellenlast abbildet. Dadurch ist die grundsätzliche Möglichkeit gegeben, die Berechnung der Geräteschnittstellenlast flexibel auf zusätzliche Anbaugeräte zu erweitern.

Gemäß Anspruch 4 umfasst die berechnete Geräteschnittstellelast gewichtsbedingte Lastanteile, bei denen es sich um gravitationsbedingte und/oder trägheitsbedingte Lastanteile handelt. Diese Lastanteile stehen bei einer Straßenfahrt im Vordergrund.

Der Arbeitsbetrieb des Arbeitssystems ist Gegenstand von Anspruch 5, bei dem zusätzlich zu den gewichtsbedingten Lastanteilen prozessbedingte Lastanteile hinzukommen. Solche Lastanteile gehen beispielsweise auf den Eingriff zwischen Anbaugerät und Feldboden zurück, der beim Pflügen oder dergleichen stattfindet.

Ganz allgemein wird gemäß Anspruch 6 vorgeschlagen, dass die Geräteschnittstellenlast aus dem an dem Anbaugerät herrschenden Kräfte- und Momentengleichgewicht ermittelt wird, wobei je nach Betriebsart ausschließlich gewichtskraftbedingte Lastanteile (Straßenfahrten) oder gewichtskraftbedingte und prozesskraftbedingte Lastanteile (Arbeitsbetrieb) berechnet werden.

Eine noch weitergehende Flexibilität lässt sich gemäß Anspruch 7 dadurch erreichen, dass das Anbaugerätemodell bedienerseitig parametrierbar ist. Beispielsweise lässt sich das Anbaugerätemodell auf eine Änderung der Anbaugeräteeinstellung hin parametrieren.

Die ebenfalls bevorzugten Ausgestaltungen gemäß den Ansprüchen 8 bis 10 betreffen bevorzugte Varianten für die Definition des Eingangsvariablensatzes, aus dem basierend auf dem Anbaugerätemodell die Geräteschnittstellenlast ermittelt wird. In Einzelnen kann eine Eingangsvariable der Betriebsmittel-Füllstand für das Anbaugerät sein, was sich in erster Linie auf den gewichtsbedingen Lastanteil auswirkt (Anspruch 8). Alternativ oder zusätzlich kann eine Eingangsvariable gemäß Anspruch 9 die Bodenbeschaffenheit des Feldbodens betreffen, was sich insbesondere auf die Prozesskräfte auswirkt. Schließlich kann es alternativ oder zusätzlich gemäß Anspruch 10 vorgesehen sein, dass eine Eingangsvariable einen Arbeitsprozessparameter wie die Fahrgeschwindigkeit der Arbeitsmaschine betrifft, was sich je nach konstruktiver Ausgestaltung auf den gewichtsbedingten und/oder prozessbedingten Lastanteil an der Geräteschnittstellenlast auswirken kann.

Zumindest ein Teil des Eingangsvariablensatzes lässt sich gemäß Anspruch 11 vorzugsweise bedienerseitig über die Bedien- und Anzeigeeinheit eingeben. In besonders bevorzugter Ausgestaltung lassen sich sowohl die Parametrierung des Anbaugerätemodells gemäß Anspruch 7 als auch die Eingabe des Eingangsvariablensatzes gemäß Anspruch 11 mittels eines natürlichsprachigen Dialogs über die Bedien- und Anzeigeeinheit vornehmen.

Basierend auf der Berechnung der Geräteschnittstellenlast ist vorschlagsgemäß die Bewertung bzw. Optimierung der Arbeitsmaschinenkonfiguration vorgesehen. Die Bewertung bzw. Optimierung basiert erfindungsgemäß auf einem Arbeitsmaschinenmodell, das den Zusammenhang zwischen der Geräteschnittstellenlast und der an der Arbeitsmaschine herrschenden Kräfte- und Momentenverteilung abbildet. Auch hier ermöglicht die Nutzung eines Arbeitsmaschinenmodells, das vorzugsweise parametrierbar ist, eine besonders hohe Flexibilität im Hinblick auf eine Änderung bzw. Erweiterung der Arbeitsmaschine.

Gemäß Anspruch 12 kann die Bewertung bzw. Optimierung die Ballastierung der Arbeitsmaschine und/oder die Reifendrücke der Luftreifen der Arbeitsmaschine betreffen. Andere Bewertungs- bzw. Optimierungsgegenstände sind denkbar.

Nach einer weiteren Lehre gemäß Anspruch 13, der eigenständige Bedeutung zukommt, wird das beschriebene Verfahren für den Betrieb des vorschlagsgemäßen, landwirtschaftlichen Arbeitssystems als solches beansprucht.

Wesentlich nach der weiteren Lehre ist in Übereinstimmung mit den beschriebenen Betriebsverfahren zu der erstgenannten Lehre, dass mittels der Systemsteuerung die Anbaugerätekonfiguration ermittelt wird, basierend auf der ermittelten Gerätekonfiguration die über die Geräteschnittstelle übertragene Geräteschnittstellenlast berechnet wird und basierend auf der berechneten Geräteschnittstellenlast die Arbeitsmaschinenkonfiguration bewertet und/oder optimiert wird. Auch insoweit darf auf alle Ausführungen zu der erstgenannten Lehre verwiesen werden.

Bei der besonders bevorzugten Ausgestaltung gemäß Anspruch 14 löst die Bestückung der Arbeitsmaschine mit dem Anbaugerät die Übertragung der Anbaugerätekonfiguration und/oder des Anbaugerätemodells von einer dem Anbaugerät zugeordneten Anbaugerätesteuerung 3a auf die Systemsteuerung aus. Dadurch ergibt sich gewissermaßen Plug&Play-Funktionalität, die eine nahezu selbsttätige Bewertung bzw. Optimierung des vorschlagsgemäßen Arbeitssystems und damit eine hohe Bedienerfreundlichkeit ermöglicht.

Im Folgenden wird die Erfindung anhand einer lediglich ein Ausführungsbeispiel darstellenden Zeichnung erläutert. In der Zeichnung zeigt
- Fig. 1: In einer Prinzipdarstellung die wesentlichen Komponenten eines vorschlagsgemäßen landwirtschaftlichen Arbeitssystems mit einer landwirtschaftlichen Arbeitsmaschine einschließlich Anbaugerät und
- Fig. 2: die für die vorschlagsgemäße Lösung wesentlichen, steuerungstechnischen Komponenten.

Für die Ausgestaltung der dargestellten Arbeitsmaschine 1 des vorschlagsgemäßen landwirtschaftlichen Arbeitssystems sind zahlreiche Varianten denkbar. Beispielsweise kann es sich bei der Arbeitsmaschine 1 um einen Traktor, einen Hochlader, insbesondere Teleskoplader, um eine selbstfahrende Erntemaschine oder dergleichen handeln.

Die Arbeitsmaschine 1 lässt sich über mindestens eine Geräteschnittstelle 2 mit mindestens einem Anbaugerät 3 bestücken. Bei der Geräteschnittstelle 2 handelt es sich hier ganz allgemein um eine mechanische Kupplung zwischen der Arbeitsmaschine 1 und dem Anbaugerät 3. Bei dem dargestellten und insoweit bevorzugten Ausführungsbeispiel ist die Geräteschnittstelle 2 als Dreipunkt-Kraftheber ausgestaltet, der für die Kopplung mit dem Anbaugerät 3 zwei Unterlenker 2a und einen Oberlenker 2b aufweist. Die Geräteschnittstelle 2 kann als Front- oder Heckkraftheber ausgestaltet sein. Grundsätzlich kann es sich bei der Geräteschnittstelle 2 aber auch um ein Zugpendel handeln. Andere Varianten für die Geräteschnittstelle 2 sind Systeme mit einfacher Zugzapfenkupplung, mit Hitch Haken, mit Kugelkopfkupplung oder dergleichen.

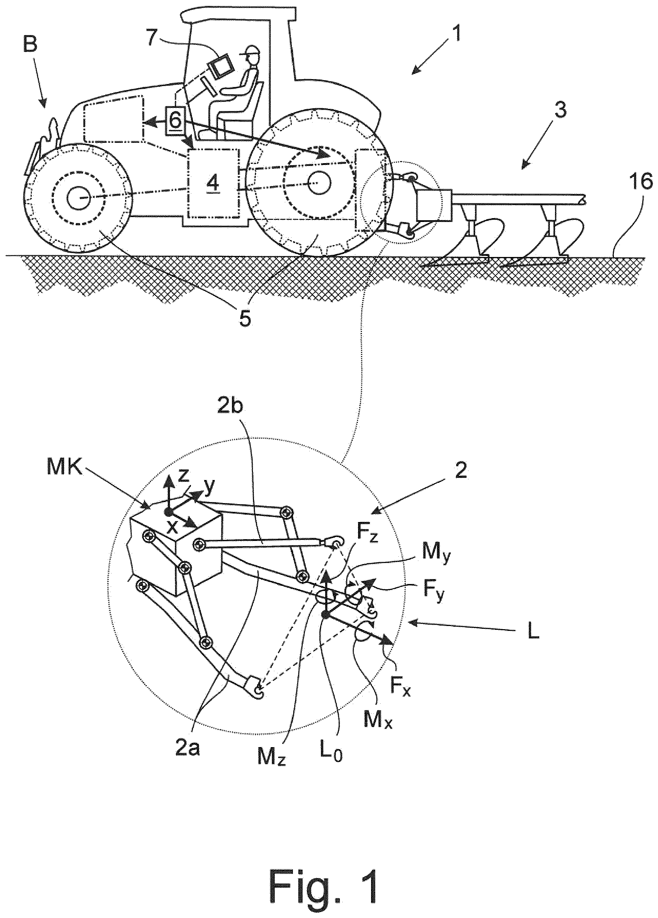

Bei dem Anbaugerät 3 kann es sich beispielsweise um ein Bodenbearbeitungsgerät wie um einen Pflug (Fig. 1), einen Grubber, eine Egge oder dergleichen handeln. Andere Anbaugeräte 3, beispielsweise Heuwerbemaschinen, Saatmaschinen oder dergleichen können hier gleichermaßen zur Anwendung kommen.

Der Arbeitsmaschine 1 ist eine Arbeitsmaschinenkonfiguration 9 zugeordnet, während dem Anbaugerät 3 eine Anbaugerätekonfiguration 8 zugeordnet ist.

Aus den Konfigurationen ergeben sich der Typ der Arbeitsmaschine bzw. Anbaugeräts sowie ggf. die hier relevanten Einstellparameter, wie im allgemeinen Teil der Beschreibung erläutert worden ist.

Die Arbeitsmaschine 1 ist mit einer Antriebseinheit 4 ausgestattet, die hier und vorzugsweise einen Verbrennungsmotor aufweist. Die Antriebseinheit 4 wirkt in üblicher Weise über einen Antriebsstrang auf Bodeneingriffselemente, insbesondere auf die hier und vorzugsweise vier Laufräder 5. Vorzugsweise handelt es sich bei der Arbeitsmaschine 1 um eine allradgetriebene Arbeitsmaschine 1, sodass alle vier Laufräder 5 angetrieben bzw. antreibbar sind.

Zu Ansteuerung der antriebsrelevanten Komponenten ist eine Systemsteuerung 6 vorgesehen, bei der es sich hier und vorzugsweise um die Maschinensteuerung der Arbeitsmaschine 1 handelt. Der Arbeitsmaschine 1 ist eine Bedien- und Anzeigeeinheit 7 zugeordnet, die Informationsschnittstelle zu dem Bediener der Arbeitsmaschine 1 bereitstellt.

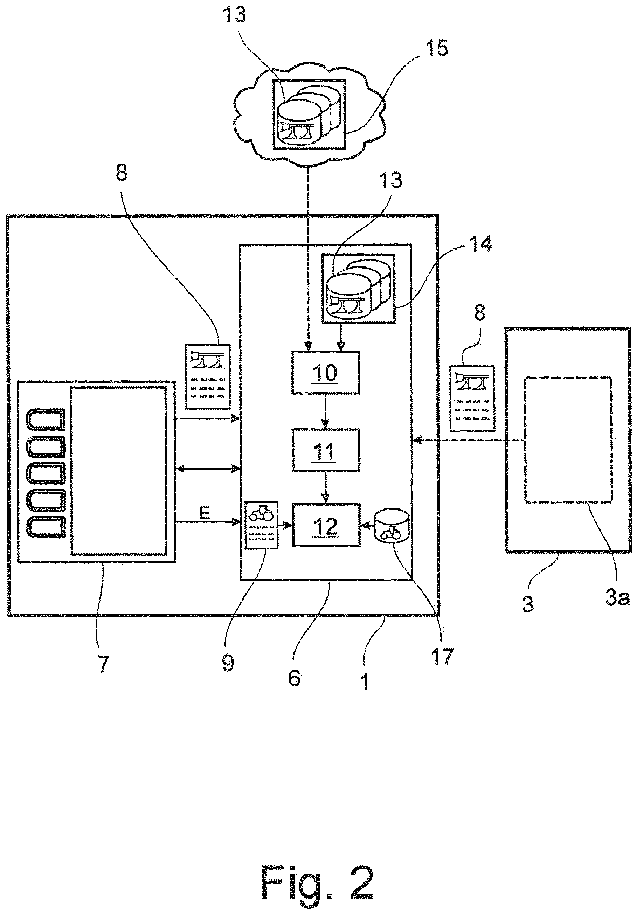

Wesentlich ist nun, dass die Systemsteuerung 6 eingerichtet ist, die Anbaugerätekonfiguration 8 zu ermitteln. Zumindest ein Teil der Anbaugerätekonfiguration 8 kann beispielsweise basierend auf einem Kommunikationszyklus mit einer in Fig. 2 lediglich angedeuteten Anbaugerätesteuerung 3a ermittelt werden. Alternativ oder zusätzlich kann es vorgesehen sein, dass zumindest ein Teil der Anbaugerätekonfiguration 8 über die Bedien- und Anzeigeeinheit 7 basierend auf einer Benutzereingabe ermittelt wird. Denkbar ist auch, dass am Anbaugerät 3 ein Informationsträger wie ein RFID-Chip angeordnet ist, der von der Systemsteuerung 6 zur Identifikation des Anbaugeräts 3 ausgelesen wird, wobei die Systemsteuerung 6 hiervon gegebenenfalls über eine Datenbank die Anbaugerätekonfiguration 8 ableitet.

Die Systemsteuerung 6 ist weiter eingerichtet, basierend auf der ermittelten Gerätekonfiguration 8 die über die Geräteschnittstelle 2 übertragene Geräteschnittstellenlast L zu berechnen. Unter der Geräteschnittstellenlast L sind alle relevanten Kräfte und Momente zusammengefasst, die von dem Anbaugerät 3 auf die Arbeitsmaschine 1 wirken. Bei der als Dreipunkt-Kraftheber ausgestalteten Geräteschnittstelle 2 ergeben sich drei Kraftangriffspunkte, wobei hier zur Vereinfachung im Weiteren auf den resultierenden, virtuellen Kraftangriffspunkt L₀ Bezug genommen wird, an dem die gedachten resultierenden Kräfte und Momente angreifen.

Fig. 1 zeigt beispielhaft, dass der Geräteschnittstellenlast L die Kräfte F_{X}, F_{y}, F_{z} sowie die Drehmomente Mₓ, M_{y} und M_{z}, zugeordnet sind, die an dem virtuellen Kraftangriffspunkt L₀ angreifen und die auf das Maschinenkoordinatensystem MK bezogen sind. Bei den Kräften F_{X}, F_{y}, F_{z} handelt es sich um die in x-, y- und z-Richtung des Maschinenkoordinatensystems MK vom Anbaugerät 3 auf die Arbeitsmaschine 1 wirkenden Kräfte. Die Drehmomente Mₓ, M_{y} und M_{z} sind die vom Anbaugerät 3 auf die Arbeitsmaschine 1 wirkenden Drehmomente um die x-Achse, um die y-Achse bzw. um die z-Achse des Maschinenkoordinatensystems MK. Dies ist in der Detaildarstellung von Fig. 1 zu entnehmen.

Die Systemsteuerung 6 ist schließlich eingerichtet, basierend auf der berechneten Gerätestellenlast L die Arbeitsmaschinenkonfiguration 9 zu bewerten und/oder zu optimieren. Einzelheiten zu der Bewertung und der Optimierung werden weiter unten diskutiert.

Die vorschlagsgemäße Arbeitsweise der Systemsteuerung 6 ist in Fig. 2 durch drei Funktionsmodule 10, 11, 12 dargestellt. Das Funktionsmodul 10 betrifft die Ermittlung der Anbaugerätekonfiguration 8, das Funktionsmodul 11 betrifft die Berechnung der Geräteschnittstellenlast L und das Funktionsmodul 12 betrifft die Bewertung und/oder Optimierung der Arbeitsmaschinenkonfiguration 9.

Es darf darauf hingewiesen werden, dass die Geräteschnittstellenlast L bei stehender Arbeitsmaschine 1 sogenannte statische Schnittstellenkräfte Fₓ, F_{y} und F_{z} und/oder Schnittstellenmomente Mₓ, M_{y} und M_{z} umfasst, während die Arbeitsmaschine während der Straßenfahrt und während des Arbeitsbetriebs aufgrund der Bewegung der Arbeitsmaschine 1 zusätzlich dynamische Schnittstellenkräfte Fₓ, F_{y} und F_{z} und/oder Schnittstellenmomente Mₓ, M_{y} und M_{z} umfasst.

Hier und vorzugsweise ist zumindest ein Teil der Systemsteuerung 6, vorzugsweise die gesamte Systemsteuerung 6, als Maschinensteuerung ausgestaltet und in der Arbeitsmaschine 1 angeordnet. Grundsätzlich ist es denkbar, dass zumindest ein Teil der Systemsteuerung 6 als Telemetriesteuerung ausgestaltet und getrennt von der Arbeitsmaschine 1 angeordnet ist. Ganz allgemein kann die Systemsteuerung 6 zumindest zum Teil dezentral strukturiert sein.

Es wurde schon darauf hingewiesen, dass die Anbaugerätekonfiguration 8 vorzugsweise den Typ des Anbaugeräts 3 und ggf. die relevanten Einstellparameter des Anbaugeräts 3 umfasst und dass die Arbeitsmaschinenkonfiguration 9 vorzugsweise den Typ der Arbeitsmaschine und ggf. die relevanten Einstellparameter der Arbeitsmaschine 1 umfasst.

Bei dem in Fig. 1 dargestellten Ausführungsbeispiel handelt es sich bei dem Typ des Anbaugeräts 3 um einen Pflug, der als Anbaupflug ausgelegt ist.

Die Arbeitsmaschinenkonfiguration 9 beinhaltet als Typ der Arbeitsmaschine 1 bei dem in Fig. 1 dargestellten Ausführungsbeispiel einen vierradgetriebenen Traktor mit als Luftreifen ausgestalteten Laufrädern 5 sowie mit einer veränderlichen Ballastierung B. Entsprechend kann es sich bei den relevanten Einstellparametern um die Ballastierung B und/oder die Reifendrücke der als Luftreifen ausgestalteten Laufräder 5 der Arbeitsmaschine 1 handeln.

Die Ballastierung B der Arbeitsmaschine 1 kann Frontgewichte (Fig. 1), Heckgewichte oder dergleichen umfassen. Je nach Ausstattung der Arbeitsmaschine 1 kann die Veränderung der Ballastierung B rein manuell, also durch manuelles Hinzufügen, Entfernen und Verschieben von Ballastierungsgewichten, oder aber automatisiert, insbesondere motorgestützt, erfolgen.

Der Art und Weise der Berechnung der Geräteschnittstellenlast L kommt vorliegend besondere Bedeutung zu. Vorzugsweise ist es so, dass die Systemsteuerung 6 basierend auf der ermittelten Anbaugerätekonfiguration 8 ein Anbaugerätemodell 13 ermittelt, das den Zusammenhang zwischen einem Eingangsvariablensatz E und der resultierenden Geräteschnittstellenlast L abbildet. Die Ermittlung des Anbaugerätemodells 13 erfolgt im Rahmen des Funktionsmoduls 10, in dem auch die Anbaugerätekonfiguration 8 ermittelt wird. Das ist sachgerecht, da die Ermittlung der Anbaugerätekonfiguration 8 und die Ermittlung des Anbaugerätemoduls 13 auch in einem einzigen Verfahrensschritt zusammengefasst werden können.

Grundsätzlich kann die Anbaugerätekonfiguration 8 als solche bereits das Anbaugerätemodell 13 umfassen, sodass die Ermittlung des Anbaugerätemodells 13 auf eine entsprechende Auswertung der Anbaugerätekonfiguration 8 zurückgeht. Die Anbaugerätekonfiguration 8 und das Anbaugerätemodell 13 sind dann zu ein und demselben Datensatz zusammengefasst.

Die Systemsteuerung 6 kann das Anbaugerätemodell 13 grundsätzlich von der Anbaugerätesteuerung 3a empfangen. Hier und vorzugsweise ist es allerdings so, dass die Systemsteuerung 6 das Anbaugerätemodell 13 aus einer Datenbank 14 anfordert, in der verschiedene Anbaugerätemodelle 13, die jeweils einer Anbaugerätekonfiguration 8 zugeordnet sind, abgelegt sind. Die Datenbank 14 ist der Systemsteuerung 6 zugeordnet und befindet sich in der Arbeitsmaschine 1. Alternativ oder zusätzlich kann eine solche Datenbank auch arbeitsmaschinenfern vorgesehen sein. Dies ist in Fig. 2 mit der Datenbank 15 angedeutet, die auf einem arbeitsmaschinenfernen Datenserver, hier in einer Daten-Cloud, verfügbar ist.

Die Systemsteuerung 6 berechnet die Geräteschnittstellenlast L vorzugsweise basierend auf dem Anbaugerätemodell 13, das gewissermaßen das Systemverhalten des Anbaugeräts 3 abbildet.

Für die datentechnische Realisierung des Anbaugerätemodells 13 sind je nach Anwendungsfall unterschiedliche vorteilhafte Varianten denkbar. Beispielsweise kann das Anbaugerätemodell 13 in Form mindestens einer analytischen Formel vorliegen. Alternativ oder zusätzlich kann das Anbaugerätemodell 13 in Form einer Tabelle und/oder mindestens eines Kennfelds vorliegen. Schließlich ist es denkbar, dass das Anbaugerätmodell 13 in Form eines Regelwerks, das beispielsweise als Softwareroutine umgesetzt ist, vorliegt.

Wie oben angesprochen, umfasst die berechnete Geräteschnittstellenlast L gewichtsbedingte Lastanteile, also solche Lastanteile, die auf die Masse des Anbaugeräts 3 als solche zurückgehen. Hierunter fallen gravitationsbedingte Lastanteile, die auf die Schwerkraft zurückgehen. Alternativ oder zusätzlich sind hiervon auch trägheitsbedingte Lastanteile umfasst, die auf die Massenträgheitskraft zurückgehen. Für die Berechnung dieser gewichtsbedingten Lastanteile bildet das Anbaugerätemodell 13 vorzugsweise die Massenschwerpunktverteilung am Anbaugerät 3 ab.

Die berechnete Gerätestellenlast L umfasst vorzugsweise zusätzlich zu den gewichtsbedingten Lastanteilen auch prozessbedingte Lastanteile, die insbesondere auf den Eingriff zwischen Anbaugerät 3 und Feldboden 16 zurückgehen. Für die Berechnung dieser prozessbedingten Lastanteile bildet das Anbaugerätemodell 13 die Prozesskraftverteilung am Anbaugerät 3 ab.

Vorzugsweise ist es so, dass die Systemsteuerung 6 aus der Massenschwerpunktverteilung am Anbaugerät 3 und der hier und vorzugsweise vorhandenen Prozesskraftverteilung am Anbaugerät 3 das an dem Anbaugerät 3 herrschende Kräfte- und Momentengleichgewicht und daraus die über die Geräteschnittstelle 2 übertragene Geräteschnittstellenlast L ermittelt. Diese auf dem Kräfte- und Momentengleichgewicht basierende Berechnung der Geräteschnittstellenlast L lässt sich auf einfache Weise automatisiert durchführen, sofern das oben angesprochene Anbaugerätemodell 13 vorliegt.

Im Sinne einer besonders flexiblen Anwendbarkeit der vorschlagsgemäßen Lösung ist das Anbaugerätemodell 13 hier und vorzugsweise auf eine Änderung der Anbaugerätekonfiguration hin parametrierbar. Beispielsweise lässt sich bei einem Pflug der Scharwinkel ggf. bedienerseitig einstellen, was durch eine entsprechende Parametrierung des Anbaugerätemodells 13 berücksichtigt werden kann. Die Parametrierung des Anbaugerätemodells 13 lässt sich vorzugsweise bedienerseitig über die Bedien- und Anzeigeeinheit 7 vollziehen. Hierfür ist die Parametrierung vorzugsweise über einen natürlichsprachigen Dialog vorgesehen.

Alternativ kann es auch vorgesehen sein, dass das Anbaugerätemodell 13 in einem Messzyklus parametriert wird. Der Messzyklus kann beispielsweise mittels einer Fahrzeugwaage vollzogen werden. In einem ersten Schritt kann beispielsweise die Arbeitsmaschine 1 als solche und anschließend die Arbeitsmaschine 1 zusammen mit dem Anbaugerät 3 gewogen werden, sodass sich das Gewicht des Anbaugeräts 3 leicht ermitteln lässt. Hierfür kann der Bediener mittels der Bedien- und Anzeigeeinheit 7 über einen natürlichsprachigen Dialog angeleitet werden. Die zusätzlich für die Berechnung der Geräteschnittstellenlast L erforderliche Massenschwerpunktverteilung des Anbaugeräts 3 kann beispielsweise einer Datenbank entnommen werden. Alternativ ist es auch hier denkbar, dass der Bediener eine entsprechende Eingabe über die Bedien- und Anzeigeeinheit 7 leistet.

Wie oben angesprochen, wird die Geräteschnittstellenlast L vorzugsweise basierend auf dem Eingangsvariablensatz E und dem Anbaugerätemodell 13 berechnet. Für die Eingangsvariablen des Eingangsvariablensatzes E sind verschiedene Varianten denkbar, die miteinander kombinierbar sind.

Für den Fall, dass das Anbaugerät 3 für den Verbrauch von Betriebsmitteln wie Dünger oder dergleichen eingerichtet ist und entsprechend einen Betriebsmitteltank aufweist, handelt es sich bei dem Betriebsmittel-Füllstand für das Anbaugerät 3 vorzugsweise um eine Eingangsvariable des Eingangsvariablensatzes E. Die Geräteschnittstellenlast L wird dann zumindest basierend auf dem Betriebsmittel-Füllstand und dem Anbaugerätemodell 13 berechnet. Dies betrifft insbesondere den auf das Gewicht des Betriebsmittels zurückgehenden, gewichtsbedingten Lastanteil an der Geräteschnittstellenlast L.

Für den Fall, dass es sich bei dem Anbaugerät 3 um ein Bodenbearbeitungsgerät handelt, betrifft eine Eingangsvariable des Eingangsvariablensatzes E vorzugsweise die Bodenbeschaffenheit des Feldbodens 16, wobei die Systemsteuerung 6 zumindest basierend auf der Bodenbeschaffenheit und dem Anbaugerätemodell 13 den prozessbedingten Lastanteil der Geräteschnittlast berechnet. Es versteht sich, dass in diese Berechnung des prozessbedingten Lastanteils auch noch zu erläuternde Arbeitsprozessparameter wie die Fahrgeschwindigkeit der Arbeitsmaschine 1 eingehen.

Die Bodenbeschaffenheit kann grundsätzlich über Kennwerte zahlenmäßig eingegeben werden. Grundsätzlich ist es aber denkbar, dass die den Feldboden 16 betreffende Eingangsvariable eine Klassifizierung des Feldbodens 16 aus einer Anzahl von Klassen von Feldbodenarten und/oder aus einer Anzahl von Klassen von Feldbodenbeschaffenheiten ist. Beispielhafte Klassen für Feldbodenarten sind die Klasse "unbewachsen" und "bewachsen". Hier kann beispielsweise auch eine Pflanzensorte als Klasse festgelegt werden. Beispielhafte Klassen von Feldbodenbeschaffenheiten sind die Klasse "trocken", die Klasse "mittelfeucht" und die Klasse "feucht".

Wie oben angesprochen, kann es sich bei einer Eingangsvariablen eines Eingangsvariablensatzes auch um einen Arbeitsprozessparameter handeln. Dann wird die Geräteschnittstellenlast L, hier und vorzugsweise ein gewichtsbedingter und/oder prozessbedingter Lastanteil an der Geräteschnittstellenlast L, zumindest basierend auf dem Arbeitsprozessparameter berechnet. Bei dem Arbeitsprozessparameter kann es sich beispielsweise um die Fahrgeschwindigkeit der Arbeitsmaschine 1 und/oder am Beispiel des in Fig. 1 dargestellten Pflugs um die Eingriffstiefe des Pflugs im Feldboden 16 handeln. Andere Varianten für den Arbeitsprozessparameter sind die die Antriebsleistung der Arbeitsmaschine 1 und/oder der Wirkungsgrad in einem Antriebsstrang der Arbeitsmaschine 1.

Vorzugsweise ist zumindest der eine Teil des Eingabevariablensatzes E bedienerseitig über die Bedien- und Anzeigeeinheit 7 eingebbar. In besonders bevorzugter Ausgestaltung ist es so, dass die Systemsteuerung 6 in Abhängigkeit von der ermittelten Anbaugerätekonfiguration 8 über die Bedien- und Anzeigeeinheit 7 mindestens einen Teil des Eingangsvariablensatzes E bei dem Bediener abfragt. Auch hier ist in besonders bevorzugter Ausgestaltung ein natürlichsprachiger Dialog vorgesehen, der in Abhängigkeit von der ermittelten Anbaugerätekonfiguration 8 abläuft.

Für die Bewertung und/oder die Optimierung der Arbeitsmaschinenkonfiguration 9 liegt in der Systemsteuerung 6 ein Arbeitsmaschinenmodell 17 vor, das den Zusammenhang zwischen der Geräteschnittstellenlast L und der an der Arbeitsmaschine 1 herrschenden Kräfte- und Momentenverteilung abbildet. Die Bewertung wird dadurch vorgenommen, dass die Systemsteuerung 6 die Arbeitsmaschinenkonfiguration 9 basierend auf dem Arbeitsmaschinenmodell 17 und der berechneten Geräteschnittstellenlast L nach mindestens einem Bewertungskriterium bewertet. Die Optimierung der Arbeitsmaschinenkonfiguration 9 ist entsprechend derart vorgesehen, dass die Systemsteuerung 6 die Arbeitsmaschinenkonfiguration 9 basierend auf dem Arbeitsmaschinenmodell 17 und der berechneten Geräteschnittstellenlast L nach mindestens einem Optimierungskriterium optimiert. Die Bewertung bzw. Optimierung kann beispielsweise die Ballastierung B der Arbeitsmaschine 1 und/oder die Reifendrücke der als Luftreifen ausgestalteten Laufräder 5 der Arbeitsmaschine 1 betreffen. Die Bewertung bzw. die Optimierung der Arbeitsmaschinenkonfiguration 9 kann nach unterschiedlichen Zielvorgaben vorgenommen werden, wie im allgemeinen Teil der Beschreibung erläutert worden ist. Beispielsweise kann die Bewertung ergeben, dass die Ballastierung B nicht optimal ist, dann kann dem Bediener über die Bedien- und Anzeigeeinheit 7 im Rahmen der Optimierung eine Änderung der Ballastierung B, beispielsweise durch das Vorsehen von Zusatzgewichten im vorderen oder hinterem Bereich der Arbeitsmaschine 1 vorgeschlagen werden. Ähnliches gilt für die Änderung der Reifendrücke der als Luftreifen ausgestalteten Laufräder 5. Hier ist es aber auch denkbar, dass die Optimierung der Reifendrücke mittels eines Reifenkontrollsystems mittels eines Kompressors oder dgl. vorgenommen wird.

Eine weitere Lehre, der eigenständige Bedeutung zukommt, betrifft die landwirtschaftliche Arbeitsmaschine 1 als solche, wobei die Systemsteuerung 6 insgesamt als Maschinensteuerung der Arbeitsmaschine 1 ausgestaltet ist. Die Arbeitsmaschine 1 ist mangels dezentraler Steuerungsstruktur also steuerungstechnisch autark ausgebildet. Auf alle Ausführungen zu der erstgenannten Lehre darf verwiesen werden.

Nach einer weiteren Lehre, der ebenfalls eigenständige Bedeutung zukommt, wird ein Verfahren für den Betrieb des vorschlagsgemäßen landwirtschaftlichen Arbeitssystems 1 als solches beansprucht.

Wesentlich nach dem vorschlagsgemäßen Verfahren ist wie oben erläutert, dass mittels der Systemsteuerung 6 die Anbaugerätekonfiguration 8 ermittelt wird, basierend auf der ermittelten Anbaugerätekonfiguration 8 die über die Geräteschnittstelle 2 übertragene Geräteschnittstelllast L berechnet wird und basierend auf der berechneten Geräteschnittstellenlast L die Arbeitsmaschinekonfiguration 9 bewertet und/oder optimiert wird. Auch insoweit darf auf die Ausführungen zu der erstgenannten Lehre verwiesen werden.

Nach einer bevorzugten Ausgestaltung des vorschlagsgemäßen Verfahrens wird mit der Bestückung der Arbeitsmaschine 1 mit dem Anbaugerät 3 zumindest ein Teil der Anbaugerätekonfiguration 8 und/oder des Anbaugerätemodells 13 von einer dem Anbaugerät 3 zugeordneten Gerätesteuerung 3a auf die Systemsteuerung 6 übertragen. Dies entspricht einer oben angesprochenen Plug&Play-Funktionalität, was, wie ebenfalls oben erläutert, zu einer besonders hohen Bedienerfreundlichkeit führt.

### Bezugszeichen

- 1: Arbeitsmaschine
- 2: Geräteschnittstelle
- 2a: Unterlenker
- 2b: Oberlenker
- 3: Anbaugerät
- 3a: Anbaugerätesteuerung
- 4: Antriebseinheit
- 5: Laufräder
- 6: Systemsteuerung
- 7: Bedien- und Anzeigeeinrichtung
- 8: Anbaugerätekonfiguration
- 9: Arbeitsmaschinenkonfiguration
- 10: Funktionsmodul
- 11: Funktionsmodul
- 12: Funktionsmodul
- 13: Anbaugerätemodell
- 14: Datenbank
- 15: Datenbank
- 16: Feldboden
- 17: Arbeitsmaschinenmodell
- E: Eingangsvariablensatz
- F: Kräfte
- L: Geräteschnittstellenlast
- L₀: Virtueller Kraftangriffspunkt
- M: Drehmomente
- MK: Maschinenkoordinatensystem

## Patentansprüche

1. Landwirtschaftliches Arbeitssystem mit einer landwirtschaftlichen Arbeitsmaschine (1), die über mindestens eine Geräteschnittstelle (2) mit mindestens einem Anbaugerät (3) bestückbar ist, wobei der Arbeitsmaschine (1) eine Arbeitsmaschinenkonfiguration (9) zugeordnet ist, wobei dem Anbaugerät (3) eine Anbaugerätekonfiguration (8) zugeordnet ist,
wobei eine Antriebseinheit (4) vorgesehen ist, die über einen Antriebsstrang auf Bodeneingriffselemente, insbesondere auf Laufräder (5), wirkt und wobei eine Systemsteuerung (6) und eine der Arbeitsmaschine (1) zugeordnete Bedien- und Anzeigeeinheit (7) vorgesehen sind, wobei die Systemsteuerung (6) eingerichtet ist, die Anbaugerätekonfiguration (8) zu ermitteln,
**dadurch gekennzeichnet,**
**dass** die Systemsteuerung (6) eingerichtet ist, basierend auf der ermittelten Anbaugerätekonfiguration (8) die über die Geräteschnittstelle (2) übertragene Geräteschnittstellenlast (L) zu berechnen und basierend auf der berechneten Geräteschnittstellenlast (L) die Arbeitsmaschinenkonfiguration (9) zu bewerten und/oder zu optimieren, und
**dass** in der Systemsteuerung (6) ein Arbeitsmaschinenmodell (17) vorliegt, das den Zusammenhang zwischen der Geräteschnittstellenlast (L) und der an der Arbeitsmaschine (1) herrschenden Kräfte- und Momentenverteilung abbildet, und dass die Systemsteuerung (6) die Arbeitsmaschinenkonfiguration (9) basierend auf dem Arbeitsmaschinenmodell (17) und der berechneten Geräteschnittstellenlast (L) nach mindestens einem Bewertungskriterium bewertet und/oder nach mindestens einem Optimierungskriterium optimiert.

2. Landwirtschaftliches Arbeitssystem nach Anspruch 1, **dadurch gekennzeichnet, dass** zumindest ein Teil der Systemsteuerung (6) als Maschinensteuerung ausgestaltet und in der Arbeitsmaschine (1) angeordnet ist, vorzugsweise, dass zumindest ein Teil der Systemsteuerung (6) als Telemetriesteuerung ausgestaltet und getrennt von der Arbeitsmaschine (1) angeordnet ist.

3. Landwirtschaftliches Arbeitssystem nach einem der vorhergehenden Ansprüche, **dadurch gekennzeichnet, dass** die Systemsteuerung (6) basierend auf der ermittelten Anbaugerätekonfiguration (8) ein Anbaugerätemodell (13) ermittelt, das den Zusammenhang zwischen einem Eingangsvariablensatz (E) und der resultierenden Geräteschnittstellenlast (L) abbildet, und die Geräteschnittstellenlast (L) basierend auf dem Eingangsvariablensatz (E) und dem Anbaugerätemodell (13) berechnet, vorzugsweise, dass das ermittelte Anbaugerätemodell (13) in der Systemsteuerung (6) in Form mindestens einer analytischen Formel und/oder mindestens einer Tabelle und/oder mindestens eines Kennfelds und/oder mindestens eines Regelwerks vorliegt.

4. Landwirtschaftliches Arbeitssystem nach Anspruch 3, **dadurch gekennzeichnet, dass** die berechnete Geräteschnittstellenlast (L) gewichtsbedingte, insbesondere gravitationsbedingte und/oder trägheitsbedingte, Lastanteile umfasst und dass das Anbaugerätemodell (13) für die Berechnung der gewichtsbedingten Lastanteile die Massenschwerpunktverteilung am Anbaugerät (3) abbildet.

5. Landwirtschaftliches Arbeitssystem nach Anspruch 3 oder 4, **dadurch gekennzeichnet, dass** die berechnete Geräteschnittstellenlast (L) prozessbedingte, insbesondere auf den Eingriff zwischen Anbaugerät (3) und Feldboden (16) zurückgehende, Lastanteile umfasst und dass das Anbaugerätemodell (13) für die Berechnung der prozessbedingten Lastanteile die Prozesskraftverteilung am Anbaugerät (3) abbildet.

6. Landwirtschaftliches Arbeitssystem nach Anspruch 4 und ggf. nach Anspruch 5, **dadurch gekennzeichnet, dass** die Systemsteuerung (6) aus der Massenschwerpunktverteilung am Anbaugerät (3) und der ggf. vorhandenen Prozesskraftverteilung am Anbaugerät (3) das an dem Anbaugerät (3) herrschende Kräfte- und Momentengleichgewicht ermittelt und daraus die über die Geräteschnittstelle (2) übertragene Geräteschnittstellenlast (L) berechnet.

7. Landwirtschaftliches Arbeitssystem nach Anspruch 3 und ggf. nach einem der Ansprüche 4 bis 6, **dadurch gekennzeichnet, dass** das Anbaugerätemodell (13) parametrierbar ist, vorzugsweise, dass das Anbaugerätemodell (13) bedienerseitig über die Bedien- und Anzeigeeinheit und/oder einen Messzyklus parametrierbar ist.

8. Landwirtschaftliches Arbeitssystem nach einem der vorhergehenden Ansprüche, **dadurch gekennzeichnet, dass** das Anbaugerät (3) für den Verbrauch von Betriebsmitteln wie Dünger o. dgl. eingerichtet ist und einen Betriebsmitteltank aufweist, dass eine Eingangsvariable des Eingangsvariablensatzes (E) den Betriebsmittel-Füllstand für das Anbaugerät (3) betrifft und dass die Geräteschnittstellenlast (L), insbesondere ein gewichtsbedingter Lastanteil an der Geräteschnittstellenlast (L), zumindest basierend auf dem Betriebsmittel-Füllstand und dem Anbaugerätemodell (13) berechnet wird.

9. Landwirtschaftliches Arbeitssystem nach einem der vorhergehenden Ansprüche, **dadurch gekennzeichnet, dass** eine Eingangsvariable des Eingangsvariablensatzes (E) die Bodenbeschaffenheit des Feldbodens (16) betrifft und dass die Systemsteuerung (6) zumindest basierend auf der Bodenbeschaffenheit und dem Anbaugerätemodell (13) den prozessbedingten Lastanteil der Geräteschnittstellenlast (L) berechnet, vorzugsweise, dass die den Feldboden (16) betreffende Eingangsvariable eine Klassifizierung des Feldbodens (16) aus einer Anzahl von Klassen von Feldbodenarten und/oder aus einer Anzahl von Klassen von Feldbodenbeschaffenheiten ist.

10. Landwirtschaftliches Arbeitssystem nach einem der vorhergehenden Ansprüche, **dadurch gekennzeichnet, dass** eine Eingangsvariable des Eingangsvariablensatzes (E) ein Arbeitsprozessparameter, insbesondere die Fahrgeschwindigkeit der Arbeitsmaschine (1) und/oder die Eingriffstiefe im Feldboden (16) und/oder die Antriebsleistung der Arbeitsmaschine (1) und/oder des Wirkungsgrads in einem Antriebsstrang der Arbeitsmaschine (1), ist und dass die Geräteschnittstellenlast (L), insbesondere ein gewichtsbedingter und/oder prozessbedingter Lastanteil an der Geräteschnittstellenlast (L), zumindest basierend auf dem Arbeitsprozessparameter und dem Anbaugerätemodell (13) berechnet wird.

11. Landwirtschaftliches Arbeitssystem nach einem der vorhergehenden Ansprüche, **dadurch gekennzeichnet, dass** zumindest ein Teil des Eingangsvariablensatzes (E) bedienerseitig über die Bedien- und Anzeigeeinheit (7) eingebbar ist, vorzugsweise, dass die Systemsteuerung (6) in Abhängigkeit von der ermittelten Anbaugerätekonfiguration (8) über die Bedien- und Anzeigeeinheit (7) mindestens einen Teil des Eingangsvariablensatzes (E) bei dem Bediener abfragt.

12. Landwirtschaftliches Arbeitssystem nach einem der vorhergehenden Ansprüche, **dadurch gekennzeichnet, dass** die Bewertung bzw. die Optimierung die Ballastierung (B) der Arbeitsmaschine (1) und/oder die Reifendrücke der insbesondere als Luftreifen ausgestalteten Laufräder (5) der Arbeitsmaschine (1) betrifft.

13. Verfahren für den Betrieb eines landwirtschaftlichen Arbeitssystems, insbesondere eines landwirtschaftlichen Arbeitssystems nach einem der Ansprüche 1 bis 12, wobei das Arbeitssystem eine landwirtschaftliche Arbeitsmaschine (1) aufweist, die über mindestens eine Geräteschnittstelle (2) mit mindestens einem Anbaugerät (3) bestückbar ist, wobei der Arbeitsmaschine (1) eine Arbeitsmaschinenkonfiguration (9) zugeordnet ist, wobei dem Anbaugerät (3) eine Anbaugerätekonfiguration (8) zugeordnet ist,
wobei eine Antriebseinheit (4) vorgesehen ist, die über einen Antriebsstrang auf Laufräder (5) wirkt und wobei eine Systemsteuerung (6) und eine der Arbeitsmaschine (1) zugeordnete Bedien- und Anzeigeeinheit (7) vorgesehen sind, wobei mittels der Systemsteuerung (6) die Anbaugerätekonfiguration (8) ermittelt wird,
**dadurch gekennzeichnet,**
**dass** mittels der Systemsteuerung (6) basierend auf der ermittelten Anbaugerätekonfiguration (8) die über die Geräteschnittstelle (2) übertragene Geräteschnittstellenlast (L) berechnet wird und basierend auf der berechneten Geräteschnittstellenlast (L) die Arbeitsmaschinenkonfiguration (9) bewertet und/oder optimiert wird, und
**dass** in der Systemsteuerung (6) ein Arbeitsmaschinenmodell (17) vorliegt, das den Zusammenhang zwischen der Geräteschnittstellenlast (L) und der an der Arbeitsmaschine (1) herrschenden Kräfte- und Momentenverteilung abbildet, und dass die Systemsteuerung (6) die Arbeitsmaschinenkonfiguration (9) basierend auf dem Arbeitsmaschinenmodell (17) und der berechneten Geräteschnittstellenlast (L) nach mindestens einem Bewertungskriterium bewertet und/oder nach mindestens einem Optimierungskriterium optimiert.

14. Verfahren nach Anspruch 13, **dadurch gekennzeichnet, dass** mit der Bestückung der Arbeitsmaschine (1) mit dem Anbaugerät (3) die Anbaugerätekonfiguration (8) und/oder das Anbaugerätemodell (13) von einer, dem Anbaugerät (3) zugeordneten Anbaugerätesteuerung (3a) auf die Systemsteuerung (6) übertragen wird.

## Claims

1. An agricultural operational system with an agricultural working machine (1) which can be fitted to at least one mounted implement (3) via at least one implement interface (2), wherein a working machine configuration (9) is associated with the working machine (1), wherein a mounted implement configuration (8) is associated with the mounted implement (3), wherein a drive unit (4) is provided which acts via a drive train on ground engaging elements, in particular on running wheels (5), and wherein a system control (6) and a control and display unit (7) associated with the working machine (1) are provided, wherein the system control (6) is configured to determine the mounted implement configuration (8),
**characterized in that**
the system control (6) is configured to calculate the implement interface load (L) transmitted via the implement interface (2) based on the determined mounted implement configuration (8) and to evaluate and/or optimize the working machine configuration (9) based on the calculated implement interface load (L), and
**in that** a working machine model (17) is present in the system control (6) which maps the relationship between the implement interface load (L) and the prevailing distribution of forces and moments on the working machine (1), and **in that** the system control (6) evaluates the working machine configuration (9) in accordance with at least one evaluation criterion and/or optimizes the working machine configuration (9) in accordance with at least one optimization criterion based on the working machine model (17) and the calculated implement interface load (L).

2. The agricultural operational system according to claim 1, **characterized in that** at least a part of the system control (6) is configured as a machine control and is disposed in the working machine (1), preferably **in that** at least a part of the system control (6) is configured as a telemetry control and is disposed separately from the working machine (1).

3. The agricultural operational system according to one of the preceding claims, **characterized in that** the system control (6) determines a mounted implement model (13) based on the determined mounted implement configuration (8) which maps the relationship between an input variable set (E) and the resulting implement interface load (L), and calculates the implement interface load (L) based on the input variable set (E) and the mounted implement model (13), preferably **in that** the determined mounted implement model (13) is provided in the system control (6) in the form of at least one analytical formula and/or at least one table and/or at least one characteristic map and/or at least one set of rules.

4. The agricultural operational system according to claim 3, **characterized in that** the calculated implement interface load (L) comprises weight-related load components, in particular gravity-related and/or inertia-related load components, and **in that** the mounted implement model (13) maps the centre of mass distribution at the mounted implement (3) for the calculation of the weight-related load components.

5. The agricultural operational system according to claim 3 or claim 4, **characterized in that** the calculated implement interface load (L) comprises procedure-related load components, in particular deriving from the engagement between the mounted implement (3) and field surface (16), and **in that** the mounted implement model (13) maps the process force distribution at the mounted implement (3) for the calculation of the procedure-related load components.

6. The agricultural operational system according to claim 4 and optionally according to claim 5, **characterized in that** the system control (6) determines the prevailing equilibrium of forces and moments at the mounted implement (3) from the centre of mass distribution at the mounted implement (3) and the process force distribution which might be present at the mounted implement (3) and calculates therefrom the implement interface load (L) transmitted via the implement interface (2).

7. The agricultural operational system according to claim 3 and optionally according to one of claims 4 to 6, **characterized in that** the mounted implement model (13) can be parameterized, preferably **in that** the mounted implement model (13) can be parameterized by an operator via the control and display unit and/or a measuring cycle.

8. The agricultural operational system according to one of the preceding claims, **characterized in that** the mounted implement (3) is configured for the consumption of operating resources such as fertilizer or the like and has an operating resources tank, **in that** an input variable of the input variable set (E) relates to the operating resource fill level for the mounted implement (3), and **in that** the implement interface load (L), in particular a weight-related load component of the implement interface load (L), is calculated based on at least the operating resource fill level and the mounted implement model (13).

9. The agricultural operational system according to one of the preceding claims, **characterized in that** an input variable of the input variable set (E) relates to the ground conditions of the field surface (16), and in which the system control (6) calculates the procedure-related load component of the implement interface load (L) based on at least the ground conditions and the mounted implement model (13), preferably **in that** the input variable relating to the field surface (16) is a classification of the field surface (16) from a number of classes of field surface types and/or from a number of classes of field surface characteristics.

10. The agricultural operational system according to one of the preceding claims, **characterized in that** an input variable of the input variable set (E) is an operating procedure parameter, in particular the drive speed of the working machine (1) and/or the depth of engagement in the field surface (16) and/or the drive output of the working machine (1) and/or the efficiency in a drive train of the working machine (1), and **in that** the implement interface load (L), in particular a weight-related and/or procedure-related load component of the implement interface load (L), is calculated based on at least the operating procedure parameter and the mounted implement model (13).

11. The agricultural operational system according to one of the preceding claims, **characterized in that** at least a portion of the input variable set (E) can be input by an operator via the control and display unit (7), preferably **in that** the system control (6) requests at least a part of the input variable set (E) from the operator via the control and display unit (7) as a function of the determined mounted implement configuration (8).

12. The agricultural operational system according to one of the preceding claims, **characterized in that** the evaluation or the optimization relate to the ballast (8) of the working machine (1) and/or the tyre pressures of the running wheels (5), in particular equipped with pneumatic tyres, of the working machine (1).

13. A method for the operation of an agricultural operational system, in particular an agricultural operational system according to one of claims 1 to 12, wherein the operational system has an agricultural working machine (1) which can be fitted with at least one mounted implement (3) via at least one implement interface (2), wherein a working machine configuration (9) is associated with the working machine (1), wherein a mounted implement configuration (8) is associated with the mounted implement (3), wherein a drive unit (4) is provided which acts on running wheels (5) via a drive train, and wherein a system control (6) and a control and display unit (7) associated with the working machine (1) are provided, wherein the mounted implement configuration (8) is determined by means of the system control (6), **characterized in that**
the implement interface load (L) transmitted via the implement interface (2) is calculated based on the determined mounted implement configuration (8) by means of the system control (6), and the working machine configuration (9) is evaluated and/or optimized based on the calculated implement interface load (L), and
**in that** a working machine model (17) is present in the system control (6) which maps the relationship between the implement interface load (L) and the prevailing force and moment distribution on the working machine (1), and **in that** the system control (6) evaluates the working machine configuration (9) in accordance with at least one evaluation criterion and/or optimizes the working machine configuration (9) in accordance with at least one optimization criterion based on the working machine model (17) and the calculated implement interface load (L).

14. The method according to claim 13, **characterized in that** the mounted implement configuration (8) and/or the mounted implement model (13) are transmitted to the system control (6) by a mounted implement control (3a) associated with the mounted implement (3) when the working machine (1) is fitted with the mounted implement (3).

## Revendications

1. Système de travail agricole comprenant une machine de travail agricole (1) qui, par l'intermédiaire d'au moins une interface outil (2), peut être équipée d'au moins un outil rapporté (3), à la machine de travail (1) étant associée une configuration de machine de travail (9), à l'outil rapporté (3) étant associée une configuration d'outil rapporté,
une unité d'entraînement (4) étant prévue, laquelle agit par l'intermédiaire d'une chaîne de transmission sur des éléments d'action au sol, en particulier sur des roues de roulement (5), et une commande de système (6) et une unité d'actionnement et d'affichage (7) associée à la machine de travail (1) étant prévues, la commande de système (6) étant agencée pour détecter la configuration d'outil rapporté (8),
**caractérisé en ce que**
la commande de système (6) est agencée pour calculer, sur la base de la configuration d'outil rapporté (8) détectée, la charge à l'interface outil (L) transmise par l'intermédiaire de l'interface outil (2) et, sur la base de la charge à l'interface outil (L) calculée, pour évaluer et/ou optimiser la configuration de machine de travail (9), et
**en ce que** dans la commande de système (6) se trouve un modèle de machine de travail (17) qui représente le rapport entre la charge à l'interface outil (L) et la répartition de forces et de moments régnant au niveau de la machine de travail (1), et
**en ce que** la commande de système (6) optimise, sur la base du modèle de machine de travail (17) et de la charge à l'interface outil (L) calculée, la configuration de machine de travail (9) selon au moins un critère d'évaluation et/ou selon au moins un critère d'optimisation.

2. Système de travail agricole selon la revendication 1, **caractérisé en ce qu'**au moins une partie de la commande de système (6) est conformée en commande de machine et est disposée dans la machine de travail (1), de préférence **en ce qu'**au moins une partie de la commande de système (6) est conformée en commande télémétrique et disposée séparément de la machine de travail (1).

3. Système de travail agricole selon une des revendications précédentes, **caractérisé en ce que** la commande de système (6) détecte, sur la base de la configuration d'outil rapporté (8) détectée, un modèle d'outil rapporté (13) qui représente le rapport entre une série de variables d'entrée (E) et la charge à l'interface outil (L) résultante, et calcule la charge à l'interface outil (L) sur la base de la série de variables d'entrée (E) et du modèle d'outil rapporté (13), de préférence **en ce que** le modèle d'outil rapporté (13) détecté se trouve dans la commande de système (6) sous la forme d'au moins une formule analytique et/ou d'au moins une table et/ou d'au moins un diagramme caractéristique et/ou d'au moins une base de règles.

4. Système de travail agricole selon la revendication 3, **caractérisé en ce que** la charge à l'interface outil (L) calculée inclut des fractions de charge liées au poids, en particulier liées à la gravitation et/ou liées à l'inertie, et **en ce que** le modèle d'outil rapporté (13) représente, pour le calcul des fractions de charge liées au poids, la répartition de centre de gravité sur l'outil rapporté (3) .

5. Système de travail agricole selon la revendication 3 ou 4, **caractérisé en ce que** la charge à l'interface outil (L) calculée inclut des fractions de charge liées au processus, en particulier imputables à l'action entre outil rapporté (3) et sol du champ (16), et **en ce que** le modèle d'outil rapporté (13) représente pour le calcul des fractions de charge liées au processus la répartition de forces de processus sur l'outil rapporté (3).

6. Système de travail agricole selon la revendication 4 et le cas échéant selon la revendication 5, **caractérisé en ce que** la commande de système (6) calcule, à partir de la répartition de centre de gravité sur l'outil rapporté (3) et de la répartition de forces de processus éventuellement existante sur l'outil rapporté (3), l'équilibre de forces et de moments régnant au niveau de l'outil rapporté (3) et en déduit la charge à l'interface outil (L) transmise par l'intermédiaire de l'interface outil (2) .

7. Système de travail agricole selon la revendication 3 et le cas échéant selon une des revendications 4 à 6, **caractérisé en ce que** le modèle d'outil rapporté (13) est paramétrable, de préférence **en ce que** le modèle d'outil rapporté (13) est paramétrable côté utilisateur par l'intermédiaire de l'unité d'actionnement et d'affichage et/ou d'un cycle de mesure.

8. Système de travail agricole selon une des revendications précédentes, **caractérisé en ce que** l'outil rapporté (3) est agencé pour l'utilisation de moyens de production comme des engrais ou analogues et comporte un réservoir de moyen de production, **en ce qu'**une variable d'entrée de la série de variables d'entrée (E) concerne le niveau de remplissage de moyen de production pour l'outil rapporté (3), et **en ce que** la charge à l'interface outil (L), en particulier une fraction de charge liée au poids, est calculée au moins sur la base du niveau de remplissage de moyen de production et du modèle d'outil rapporté (13).

9. Système de travail agricole selon une des revendications précédentes, **caractérisé en ce qu'**une variable d'entrée de la série de variables d'entrée (E) concerne la nature de sol du sol du champ (16), et **en ce que** la commande de système (6) calcule la fraction de charge liée au processus de la charge à l'interface outil (L) au moins sur la base de la nature du sol et du modèle d'outil rapporté (13), de préférence **en ce que** la variable d'entrée concernant le sol de champ (16) est une classification du sol du champ (16) à partir d'un nombre de classes de types de sols de champ et/ou à partir d'un nombre de classes de natures de sols de champ.

10. Système de travail agricole selon une des revendications précédentes, **caractérisé en ce qu'**une variable d'entrée de la série de variables d'entrée (E) est un paramètre de processus de travail, en particulier la vitesse de marche de la machine de travail (1) et/ou la profondeur de pénétration dans le sol de champ (16) et/ou la puissance d'entraînement de la machine de travail (1) et/ou le rendement dans une chaîne de transmission de la machine de travail (1), et **en ce que** la charge à l'interface outil (L), en particulier une fraction de charge, liée au poids et/ou liée au processus, de la charge à l'interface outil (L) est calculée au moins sur la base du paramètre de processus de travail et du modèle d'outil rapporté (13) .

11. Système de travail agricole selon une des revendications précédentes, **caractérisé en ce qu'**au moins une partie de la série de variables d'entrée (E) peut être entrée côté utilisateur par l'intermédiaire de l'unité d'actionnement et d'affichage (7), de préférence **en ce que**, en fonction de la configuration d'outil rapporté détectée (8), la commande de système (6) demande à l'utilisateur au moins une partie de la série de variables d'entrée (E) par l'intermédiaire de l'unité d'actionnement et d'affichage (7).

12. Système de travail agricole selon une des revendications précédentes, **caractérisé en ce que** l'évaluation, respectivement, l'optimisation concerne le lestage (B) de la machine de travail (1) et/ou les pressions de pneumatiques des roues de roulement (5) de la machine de travail (1) conformées en particulier en pneumatiques.

13. Procédé de fonctionnement d'un système de travail agricole, en particulier d'un système de travail agricole selon une des revendications 1 à 12, le système de travail comportant une machine de travail agricole (1) qui, par l'intermédiaire d'au moins une interface outil (2), peut être équipée d'au moins un outil rapporté (3), à la machine de travail (1) étant associée une configuration de machine de travail (9), à l'outil rapporté (3) étant associée une configuration d'outil rapporté (8),
une unité d'entraînement (4) étant prévue, laquelle agit par l'intermédiaire d'une chaîne de transmission sur des roues de roulement (5), et une commande de système (6) et une unité d'actionnement et d'affichage (7) associée à la machine de travail (1) étant prévues, la configuration d'outil rapporté (8) étant détectée au moyen de la commande de système (6),
**caractérisé en ce que**
la charge à l'interface outil (L) transmise par l'intermédiaire de l'interface outil (2) est calculée au moyen de la commande de système (6) sur la base de la configuration d'outil rapporté (8) détectée et la configuration de machine de travail (9) est évaluée et/ou optimisée sur la base de la charge à l'interface outil (L) calculée, et
**en ce que** dans la commande de système (6) se trouve un modèle de machine de travail (17) qui représente le rapport entre la charge à l'interface outil (L) et la répartition de forces et de moments régnant au niveau de la machine de travail (1), et
**en ce que** la commande de système (6) optimise, sur la base du modèle de machine de travail (17) et de la charge à l'interface outil (L) calculée, la configuration de machine de travail (9) selon au moins un critère d'évaluation et/ou selon au moins un critère d'optimisation.

14. Procédé selon la revendication 13, **caractérisé en ce que**, avec l'équipement de la machine de travail (1) avec l'outil rapporté (3), la configuration d'outil rapporté (8) et/ou le modèle d'outil rapporté (13) sont transmis à la commande de système (6) par une commande d'outil rapporté (3a) associée à l'outil rapporté (3).
